# DEMANDE DE BREVET EUROPEEN

(11) **EP 4 835 345 A1**
(43) Date de publication de la demande: **04.11.2026**
(21) Numéro de dépôt: 26162189.0
(22) Date de dépôt: 04.03.2026
(51) Int. Cl.: F17C 3/00

(54) **DISPOSITIF ET PROCÉDÉ DE STOCKAGE ET DE FOURNITURE DE FLUIDE ET VÉHICULE COMPRENANT UN TEL DISPOSITIF**

(30) Priorité: 30.04.2025 FR 2504580
(71) Demandeur: L'Air Liquide, Société Anonyme pour l'Etude et l'Exploitation des Procédés Georges Claude, 75007 Paris (FR)
(72) Inventeur: PENNEC, Yann, 75007 Paris (FR); BOUIN, Marius, 75007 Paris (FR)
(74) Mandataire: Air Liquide

(57) **Abrégé**

Dispositif (1) comprenant un réservoir (10), une circuiterie (20) munie d'un premier groupe de vanne(s) (40) disposé dans l'espacement du réservoir (10) et un second groupe de vannes (50, 60, 70) disposé en dehors du réservoir (10), le premier groupe de vanne(s) (40) comprenant une vanne d'isolation, le second groupe de vannes (50, 60, 70) comprenant une première boîte à vanne(s) (60) avec une première vanne de contrôle reliée directement à la partie supérieure du volume de stockage et à la partie inférieure du volume de stockage via respectivement une première conduites (14) et une seconde conduit (13), le second groupe de vannes comprend une seconde boîte à vanne(s) (70) avec une seconde vanne de contrôle reliée directement à la partie supérieure du volume de stockage et à la partie inférieure du volume de stockage via respectivement la première conduites (14) et la seconde conduit (13).

## Description

L'invention concerne un dispositif et un procédé de stockage et de fourniture de fluide ainsi qu'un véhicule comprenant un tel dispositif.

L'invention concerne plus particulièrement un dispositif de stockage et de fourniture de fluide comprenant un réservoir de fluide cryogénique, le réservoir comprenant une enveloppe interne définissant un volume de stockage de fluide cryogénique et une enveloppe externe disposée autour de l'enveloppe interne avec un espacement isolé thermiquement sous vide, le dispositif comprenant une circuiterie munie d'un ensemble de conduites et d'un ensemble de vannes, la circuiterie étant configurée pour permettre le transfert de fluide depuis ou vers le réservoir, dans lequel l'ensemble de vannes est constitué d'un premier groupe de vanne(s) disposé dans l'espacement du réservoir et un second groupe de vannes disposé en dehors du réservoir dans un premier boîtier raccordé au réservoir, dans lequel le premier groupe de vanne(s) comprend au moins une vanne d'isolation commandée de « type tout ou rien », c'est-à-dire sans fonction de régulation progressive de débit ou de pression, le second groupe de vannes comprenant des vannes de régulation progressive de débit ou de pression, le second groupe de vannes comprenant une première boîte à vanne(s) comprenant au moins une première vanne de contrôle de débit ou de pression reliée directement à la fois à la partie supérieure du volume de stockage et à la partie inférieure du volume de stockage via respectivement une première conduites de gaz et une seconde conduit de liquide, la première et la seconde conduite étant reliées en parallèle à la première boîte à vannes.

Le gaz naturel liquéfié est un carburant usuel dans les applications maritimes (carburant et transport). L'hydrogène liquide (LH2) est un candidat de remplacement non fossile pour les applications maritimes.

Un défi est de combler le fossé de développement entre la disponibilité et la fiabilité du l'hydrogène liquide au niveau des navires et la disponibilité des infrastructures portuaires. Les véhicules et bateaux peuvent ainsi avoir des fonctions (propulsion, production d'électricité,) nécessitant d'être compatibles avec l'un ou les deux carburants.

Ceci génère des difficultés pour le stockage et la distribution de ces carburants car la structure de tels véhicules peut être complexe et coûteuse.

A cette fin, le véhicule selon l'invention, par ailleurs conforme à la définition générique qu'en donne le préambule ci-dessus, est essentiellement caractérisé en ce que le second groupe de vannes comprend une seconde boîte à vanne(s) comprenant au moins une seconde vanne de contrôle de débit ou de pression reliée directement à la fois à la partie supérieure du volume de stockage et à la partie inférieure du volume de stockage via respectivement la première conduites de gaz et la seconde conduit de liquide, la première et la seconde conduite étant reliées en parallèle à la fois à la première boîte à vannes et à la seconde boîte à vanne(s).

L'invention permet de configurer un dispositif de stockage pour deux types de fluides, notamment l'hydrogène et le gaz naturel. Ceci permet de prévoir une compatibilité avec un carburant principal (par exemple le gaz naturel pour la propulsion) et l'hydrogène (par exemple pour la génération d'électricité). En particulier, l'invention permet de configurer un véhicule pour être utilisé avec l'un ou les deux fluides. Par exemple, le véhicule peut fonctionner avec un premier fluide (ex : GNL) au début de sa mise en service puis ensuite avec un autre fluide (ex : LH2).

Par ailleurs, des modes de réalisation de l'invention peuvent comporter l'une ou plusieurs des caractéristiques suivantes :
- le premier groupe de vanne(s) comprend uniquement une ou des vannes d'isolation disposées sur la circuiterie et configurées pour être commutées entre un premier état fermé empêchant le transfert de fluide depuis ou vers le réservoir, par exemple en cas d'installation ou de réparation, et un second état ouvert permettant le transfert de fluide depuis ou vers le réservoir, par exemple en cours d'utilisation,
- le premier groupe de vanne(s) est disposé dans un second boîtier disposé dans l'espacement du réservoir,
- le premier boîtier est fixé à l'enveloppe externe du réservoir,
- le second groupe de vannes comprend une troisième boîte à vanne(s) comprenant au moins une troisième vanne de contrôle de débit et au moins un échangeur de chaleur en échange thermique avec la circuiterie pour contrôler la température du fluide, la troisième boîte à vanne(s) étant reliée directement à la fois à la partie supérieure du volume de stockage et à la partie inférieure du volume de stockage via respectivement la première conduites de gaz et la seconde conduit de liquide, la première et la seconde conduite étant reliées en parallèle à la fois à la première boîte à vannes, à la seconde boîte à vanne(s) et la troisième boîte à vanne(s),
- au moins l'une parmi : la première boîte à vanne(s), la seconde boîte à vanne(s), la troisième boîte à vanne(s) est étanche et isolée sous vide,
- la première boîte à vanne(s) et la seconde boîte à vanne(s) sont des boîtes distinctes étanches isolées sous vide dont les vides sont indépendants,
- la première boîte à vanne(s) et la seconde boîte à vanne(s) sont respectivement deux compartiments d'une même boîte et dont l'étanchéité sous vide est commune,
- la circuiterie comprend une boucle de circulation transitant dans le volume de stockage,
- la boucle de circulation transitant dans le volume de stockage est raccordée à la troisième boîte à vanne(s),
- le premier boîtier est isolé thermiquement et son volume interne est à atmosphère contrôlée, par exemple à majorité de gaz inerte ou ventilé avec un gaz inerte tel que l'azote,
- le second groupe de vannes comprend une soupape de décharge ayant une première extrémité reliée directement à la partie supérieure du volume de stockage via une conduite de décharge traversant le réservoir et une seconde extrémité reliée à une zone de décharge de gaz,
- la soupape de décharge est située dans une quatrième boîte à vannes,
- le premier boîtier comprend un plancher horizontal et en ce qu'une partie au moins de la circuiterie située dans le boîtier transite sous le plancher,
- le premier boîtier comprend un bac de recueil de fuites de liquide disposé en partie inférieure du boîtier sous le second groupe de vannes,
- le véhicule comporte une cheminée d'évent reliée au second groupe de vannes de la circuiterie au niveau du premier boîtier via une conduite d'évent.

L'invention concerne également un véhicule, par exemple bateau, comprenant une enceinte abritant, un moteur de propulsion du type à combustion d'un fluide carburant et un dispositif de stockage et de fourniture de fluide selon l'une quelconque des caracréristiques ci-dessus ou ci-dessous, dans lequel, le dispositif de stockage est configuré pour stocker le fluide carburant du moteur de propulsion.

Selon d'autres particularités possibles :
- le véhicule comprend une première interface de raccordement de transfert de fluide accessible à l'extérieure de l'enceinte, la première interface de raccordement de transfert de fluide étant reliée à la première boîte à vannes de la circuiterie au niveau du premier boîtier via un premier ensemble de conduites de transfert,
- le véhicule comprend une seconde interface de raccordement de transfert de fluide accessible à l'extérieure de l'enceinte, la seconde interface de raccordement de transfert de fluide étant reliée au second groupe de vannes de la circuiterie au niveau du premier boîtier via un deuxième ensemble de conduites de transfert,
- le véhicule comporte un générateur électrique à partir d'un fluide carburant, dans lequel, le dispositif de stockage est configuré pour stocker le fluide du générateur électrique, le véhicule comprenant une conduite d'alimentation reliant une sortie du second groupe de vannes de la circuiterie à une entrée du générateur électrique.

L'invention concerne également un procédé de stockage et de distribution d'un fluide cryogénique, par exemple parmi : l'hydrogène liquéfié, le gaz naturel liquéfié, utilisant un dispositif ou un véhicule selon l'une quelconque des caractéristiques ci-dessus ou ci-après, le procédé comprenant une étape de remplissage du réservoir avec du liquide cryogénique via la circuiterie et l'ensemble de vannes dans lequel au moins une partie du premier groupe de vanne(s) est ouvert.

Selon d'autres particularités possibles :
- le procédé concerne le stockage et la distribution d'un premier type de fluide cryogénique par exemple, du gaz naturel liquéfié ou d'un second type fluide cryogénique, par exemple l'hydrogène liquéfié, utilisant un même dispositif de stockage et de fourniture de fluide, dans lequel, lorsque le dispositif stocke et distribue le premier type de fluide cryogénique la seconde boîte à vanne(s) est utilisée pour le transfert du fluide tandis que première boîte à vanne(s) n'est pas utilisée et est en état fermée, et lorsque le dispositif stocke et distribue le second type de fluide cryogénique, la première boîte à vanne(s) est utilisée pour le transfert du fluide tandis que la seconde boîte à vanne(s) est fermée et non utilisée.

D'autres particularités et avantages apparaîtront à la lecture de la description ci-après, faite en référence aux figures dans lesquelles :
[Fig. 1] est une vue schématique et partielle illustrant un exemple de structure et de fonctionnement d'un dispositif selon l'invention,
[Fig. 2] est une vue schématique et partielle illustrant un exemple de structure et de fonctionnement d'un véhicule selon l'invention,
[Fig. 3] est une vue schématique et partielle illustrant un autre exemple de structure et de fonctionnement d'un dispositif selon l'invention.

### Description détaillée

Sur toutes les figures, les mêmes références se rapportent aux mêmes éléments.

Dans cette description détaillée, les réalisations suivantes sont des exemples. Bien que la description se réfère à un ou plusieurs modes de réalisation, cela ne signifie pas que les caractéristiques s'appliquent seulement à un seul mode de réalisation. De simples caractéristiques de différents modes de réalisation peuvent également être combinées et/ou interchangées pour fournir d'autres réalisations.

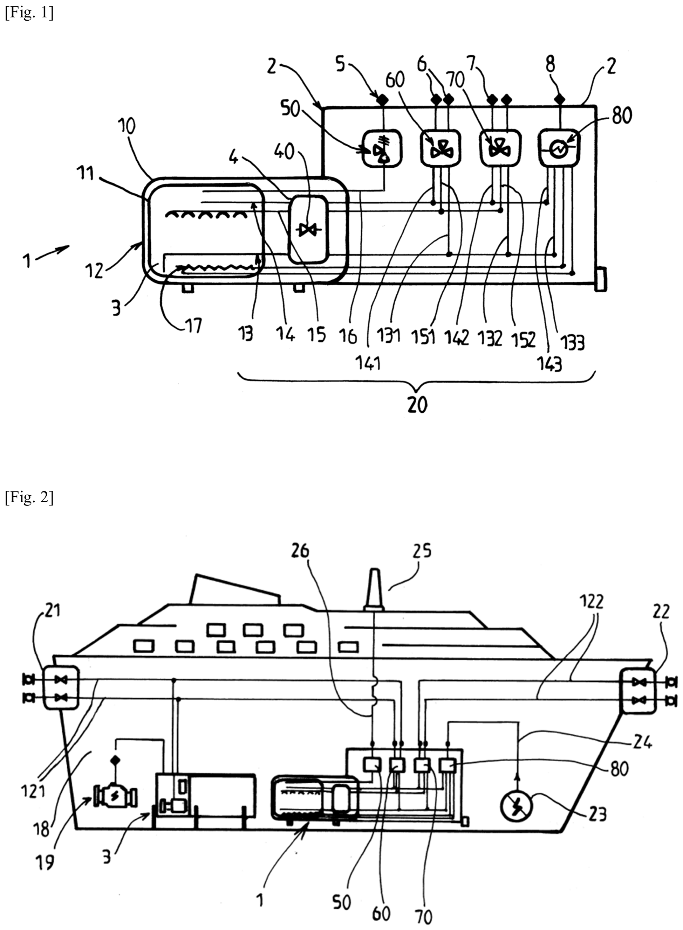

Comme illustré à l'exemple non limitatif de la [Fig. 1], le dispositif 1 de stockage et de fourniture de fluide comprend un réservoir 10 de fluide cryogénique. Ce réservoir 10 est muni d'une enveloppe 11 interne définissant un volume de stockage de fluide cryogénique et une enveloppe 12 externe disposée autour de l'enveloppe 11 interne avec un espacement isolé thermiquement sous vide. Le dispositif 1 comprend une circuiterie 20 munie d'un ensemble de conduites et d'un ensemble de vannes. La circuiterie associée aux vannes est configurée pour permettre le transfert de fluide depuis ou vers le réservoir 10 (soutirage/remplissage).

L'ensemble de vannes est constitué d'un premier groupe de vanne(s) 40 disposé dans l'espacement du réservoir 10 et un second groupe de vannes 50, 60, 70 et équipements disposés en dehors du réservoir 10 dans un premier boîtier 2 raccordé ou relié au réservoir 10. Par exemple, le premier boîtier 2 est fixé directement à l'enveloppe 12 externe du réservoir 10.

Le premier groupe de vanne(s) 40 comprend au moins une vanne d'isolation commandée de « type tout ou rien », c'est-à-dire sans fonction de régulation progressive de débit ou de pression.

De préférence, le premier groupe de vanne(s) 40 comprend de préférence uniquement une ou des vannes d'isolation disposées sur la circuiterie 20 et configurées pour être commutées entre un premier état fermé empêchant le transfert de fluide depuis ou vers le réservoir 10, par exemple en cas d'installation ou de réparation, et un second état ouvert permettant le transfert de fluide depuis ou vers le réservoir 10, par exemple en cours d'utilisation. Par exemple, la ou les vannes sont de type pneumatique et commandées manuellement ou à distance. Cette ou ces vannes ne sont par exemple pas destinées à être utilisées pour un fonctionnement nominal mais uniquement pour garantir une fiabilité de clôture élevée dans cas d'événement majeur de sécurité ou de maintenance qui nécessite de fermer le circuit.

Ce premier groupe de vannes 40 peut être associé à d'autres composants dans la boîte à vanne(s) comme par exemple un ou des capteurs de pression et/ou de température. Ce groupe de vannes 40 peut être relié à une ou des lignes de soutirage/remplissage et/ou une des conduites de retour de gaz et/ou un une ligne vers un système de maintien de pression.

De préférence, ce premier groupe de vanne(s) 40 est disposé dans un second boîtier (40) disposé dans l'espacement ou inter-paroi isolé thermiquement sous vide du réservoir 10.

Le second groupe de vannes comprend des vannes de régulation progressive de débit ou de pression ainsi que d'autres équipements.

Ce second groupe de vannes comprend en particulier une première boîte à vanne(s) 60 comprenant au moins une première vanne de contrôle de débit ou de pression reliée directement à la fois à la partie supérieure du volume de stockage et à la partie inférieure du volume de stockage via respectivement une première conduites 14 de gaz 13 et une seconde conduit 13 de liquide. La première 14 et la seconde conduite 13 sont reliées en parallèle à la première boîte 60 à vannes. Cette première boîte à vanne(s) 60 est également reliée à des lignes ou raccords 6 destinés à être reliés à des conduites 121 de transfert de fluide, par exemple respectivement liquide et gazeux (cf. [Fig. 2] et détaillé ci-après). Ainsi un premier fluide peut être acheminé au réservoir 10 via la première boîte 60 à vanne et/ou du fluide peut être soutiré du réservoir 10 via la première boîte 60 à vanne. Cette première boîte à vanne(s) 60 peut comporter tout autre composant approprié, par exemple une pompe.

Le second groupe de vannes comprend également une seconde boîte à vanne(s) 70 distincte comprenant au moins une seconde vanne de contrôle de débit ou de pression reliée directement à la fois à la partie supérieure du volume de stockage et à la partie inférieure du volume de stockage via respectivement la première conduites 14 de gaz 13 et la seconde conduit 13 de liquide. C'est-à-dire que la première 14 et la seconde conduite 13 sont reliées en parallèle à la fois à la première boîte 60 à vannes et à la seconde boîte à vanne(s) 70. Comme précédemment, la seconde boîte à vanne(s) 70 est également reliée à des lignes ou raccords 7 respectifs destinés à être reliés à des conduites 122 de transfert de fluide, par exemple respectivement liquide et gazeux (cf. [Fig. 2] et détaillé ci-après). Ainsi un second fluide peut être acheminé au réservoir 10 via la seconde boîte 70 à vanne et/ou du fluide peut être soutiré du réservoir 10 vers un autre circuit.

De préférence, la première boîte à vanne(s) 60 et la seconde boîte à vanne(s) 70 sont des enceintes distinctes isolées thermiquement sous vide. Ces boîtes à vanne 60, 70 sont donc logées dans le premier boîtier 2 dont le volume interne est de préférence à atmosphère gazeuse contrôlée, par exemple rempli de gaz inerte ou ventilé avec un gaz inerte tel que l'azote.

Comme illustré, le second groupe de vannes peut comprendre une troisième boîte à vanne(s) 80 munie d'au moins une troisième vanne de contrôle de débit et/ou de pression et au moins un échangeur de chaleur en échange thermique avec la circuiterie pour contrôler la température du fluide dans le réservoir ou soutiré du réservoir.

La troisième boîte à vanne(s) 80 servant par exemple à l'alimentation d'un générateur électrique ou d'un moteur à combustion est de préférence également reliée directement à la fois à la partie supérieure du volume de stockage et à la partie inférieure du volume de stockage via respectivement la première conduite 14 de gaz et la seconde conduit 13 de liquide.

Comme illustré, la circuiterie comprend de préférence une boucle 17 de circulation transitant dans le volume de stockage et reliée à la troisième boîte à vanne(s) 80. Cette boucle 17 de circulation peut en particulier permettre réchauffer le contenu du réservoir en y faisant passer un flux de fluide préalablement soutiré du réservoir et réchauffé en dehors du réservoir.

Ainsi, la première boîte 60 à vannes, la seconde boîte à vanne(s) 70 et la troisième boîte à vanne(s) 80 peuvent être reliées en parallèle à la première 14 et la seconde conduite 13. De cette façon, les trois ensembles de vannes et composants utilisent la même paire de conduite pour communiquer fluidiquement avec l'intérieur du réservoir 10. Ceci limite le nombre de conduites qui traversent les parois du réservoir 10.

Comme illustré, la première boîte 60 à vannes et la seconde boîte à vanne(s) 70 peuvent en outre être reliée à une conduite 15 supplémentaire qui débouche dans la partie supérieure du réservoir 10, de préférence via un système d'orifices multiples ou buses pour assurer un remplissage en pluie dans le réservoir. Comme illustré, les boîtes à vannes peuvent être reliées en parallèles à des conduites communes via des par exemple via des lignes 141, 151, 142, 152, 133, 143 respectives.

Le second groupe de vannes peut comprendre en outre au moins une soupape 50 de décharge ayant une première extrémité reliée directement à la partie supérieure du volume de stockage via une conduite 16 de décharge (de préférence dédiée) et traversant le réservoir 10 et une seconde extrémité reliée à une zone de décharge de gaz en dehors du premier boîtier 2. Cette soupape 50 de décharge sensible à la pression (et les éventuels autres composants associés peuvent être logés également dans une quatrième boîte à vanne(s) dédiée isolée et logée dans le premier 2 boîtier.

Cette architecture répartit les vannes 40 d'isolement dans le réservoir (dans la l'espacement inter-parois) tandis que les vannes et équipements de contrôle des flux et température ou pression sont logées dans un espace distinct en dehors du réservoir 10 (premier boîtier 2).

Ces deux ensembles de vannes sont physiquement indépendants et raccordés par une tuyauterie de préférence isolée sous vide. Cette architecture permet de pouvoir réaliser des tests sur le réservoir 10, notamment les essais de réception (test en pression, étanchéité), sans nécessiter de raccorder au réservoir 10 le premier boîtier 2.

Les première 60 et seconde 70 boîtes à vanne(s) peuvent être prévues pour des utilisations différentes du même réservoir 10 (par exemple selon le type de fluide stocké). Par exemple, ceci permet de prévoir des interfaces et organes de contrôle séparés et distincts selon que l'utilisation vise l'hydrogène (LH2) ou le gaz naturel (LNG) tout en mutualisant les conduites 13, 14 communiquant avec l'intérieur du réservoir.

Comme illustré dans l'exemple de la [Fig. 2], ce dispositif peut équiper un bateau 100. Le bateau 100 peut comporter une enceinte 18 (par exemple la soute) abritant, un moteur 19 de propulsion du type à combustion d'un fluide carburant et un tel dispositif de stockage et de fourniture de fluide qui peut être configuré pour stocker le fluide carburant destiné à alimenter le moteur 19 de propulsion.

Comme illustré, le bateau 100 peut comporter une première interface 21 de raccordement de transfert de fluide accessible à l'extérieur de l'enceinte 18 (dans cet exemple deux raccords). Cette première interface 21 de raccordement de transfert de fluide est reliée à la première boîte (60) à vannes de la circuiterie 20 au niveau du premier boîtier 2 via par exemple une première paire de conduites 121 de transfert.

Un réservoir 3 de carburant (GNL) distinct peut être prévu et raccordé au moteur 19 de propulsion. Et à la première paire de conduites 121 de transfert.

Le bateau 100 peut comporter une seconde interface 22 de raccordement de transfert de fluide accessible à l'extérieure de l'enceinte 18 (dans cet exemple deux raccords). Cette seconde interface 22 de raccordement de transfert de fluide est reliée par exemple reliée au second groupe de vannes (seconde boîte à vannes 70) de la circuiterie 20 au niveau du premier boîtier 2 via une deuxième paire de conduites 122 de transfert.

La première interface 21 de raccordement et la première paire de conduites 121 de transfert peuvent être prévues pour le transfert de gaz naturel tandis que la deuxième interface 22 de raccordement et la deuxième paire de conduites 122 de transfert peuvent être prévu pour le transfert d'hydrogène.

Comme illustré, le bateau 100 peut comporter un générateur 23 électrique à partir d'un fluide carburant, par exemple une pile à combustible alimentée en hydrogène. Le dispositif 1 de stockage peut ainsi être configuré pour stocker l'hydrogène liquéfié destiné à alimenter le générateur 23 électrique, par exemple via la troisième boîte à vanne(s) 80.

Comme illustré, le véhicule 100 comprend de préférence à cet effet une conduite d'alimentation reliant la troisième boîte à vanne(s) 80 à une entrée du générateur 23 électrique.

Comme illustré, le bateau 100 comporte une cheminée 25 d'évent qui peut être reliée au second groupe de vannes et plus précisément à la soupape 50 de décharge et en particulier la quatrième boîte à vannes qui l'abrite le cas échéant.

Ainsi, les deux interfaces 21, 22 de raccordement peuvent traiter séparément deux fluides distincts.

Chaque paire de conduites 121, 122 de transfert possède une conduite configurée pour recevoir le gaz de vaporisation provenant du réservoir. Ce gaz de vaporisation peut être récupéré vers la station de ravitaillement qui alimente le réservoir via l'interface 21, 22 concernée lors du remplissage.

Comme illustré, l'éventuel réservoir 3 de carburant GNL est relié uniquement au conduites 121 de transfert de gaz naturel tandis que le dispositif 1 décrit ci-dessus est relié à la fois au conduites 121 de transfert de gaz naturel et aux conduites 122 de transfert d'hydrogène liquide. C'est-à-dire que le réservoir 10 du dispositif peut être ravitaillé aussi bien par une station de ravitaillement de GNL que par une station de ravitaillement de LH2.

De préférence, le réservoir 10 du dispositif 1 n'est pas relié directement au moteur 19 de propulsion.

Cette architecture permet de dédier des boîtes à vannes 60, 70 à des usages distincts (GNL et LH2 par exemple). Ceci permet des dimensionnements et choix de composants spécifiques à chaque fluide.

Ces différents ensembles de vannes et composants sont multiplexés avec un nombre minimum de conduites 13, 14, 15 qui pénètrent dans le réservoir 10.

De préférence, toutes les vannes et composants nécessaires à l'opération (remplissage/soutirage) sont logées dans le premier boîtier 2. Ceci permet de minimiser les composants dans la soute.

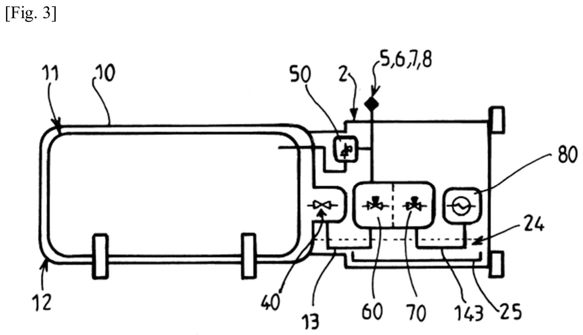

La [Fig. 3] illustre de façon simplifiée une variante de réalisation de l'invention. Cette variante se distingue de celle de la [Fig. 1] essentiellement en ce que la première boîte à vannes 60 et la seconde boîte à vannes 70 sont respectivement deux compartiments d'une même boîte et dont l'étanchéité sous vide est commune. C'est-à-dire qu'une même boîte contient à la fois la ou les vannes de contrôle pour une première application (LH2 par exemple) et la ou les vannes pour la seconde application (LNG par exemple). Cette configuration permet de mutualiser le vide des deux ensembles 60, 70. De cette façon, un même capteur pourrait détecter une fuite pour les deux applications et l'ensemble du système pourrait être mis en sécurité en cas de fuite. Ce mode de réalisation permet en outre de réduire l'encombrement global du système en regroupant plus encore les interfaces reliées au réservoir.

A noter que dans la représentation simplifiée de la [Fig.3] les mêmes éléments décrits ci-dessus sont désignés par les mêmes références numériques. Par souci de simplification, les différents raccords 5, 6, 7, 8 d'entrée/sortie ont été représentés de façon regroupée et symboliquement sous la forme d'un seul raccord mais les autres caractéristiques du mode de réalisation de la [Fig. 1] peuvent s'appliquer à celui de la [Fig. 3].

De plus, comme illustré, le premier boîtier 2 peut comprendre un plancher 24 horizontal situé dans sa partie inférieure ou à mi-hauteur (par exemple pour un opérateur). De plus, de préférence, une partie au moins de la circuiterie 13, 143 située dans le boîtier 2 transite sous ce plancher 24. Ceci facilite l'intégration mécanique, notamment en ce qui concerne la contraction thermique de la tuyauterie, qui requiert des formes en « U » ou en forme « omega ». Ceci facilité également la circulation dans le boîtier 2 pour la maintenance.
Comme illustré également, le premier boîtier 2 peut comprendre un bac 25 de recueil de potentielles fuites de liquide disposé en partie inférieure du boîtier 2 sous le second groupe de vannes, par exemple sous le plancher 24.

## Revendications

1. Dispositif de stockage et de fourniture de fluide comprenant un réservoir (10) de fluide cryogénique, le réservoir (10) comprenant une enveloppe (11) interne définissant un volume de stockage de fluide cryogénique et une enveloppe (12) externe disposée autour de l'enveloppe (11) interne avec un espacement isolé thermiquement sous vide, le dispositif (1) comprenant une circuiterie (20) munie d'un ensemble de conduites (13, 14, 15, 16, 131, 132, 133, 141, 142, 143, 151,152) et d'un ensemble de vannes (40, 50, 60, 70), la circuiterie (20) étant configurée pour permettre le transfert de fluide depuis ou vers le réservoir (10), dans lequel l'ensemble de vannes (40, 50, 60, 70) est constitué d'un premier groupe de vanne(s) (40) disposé dans l'espacement du réservoir (10) et un second groupe de vannes (50, 60, 70) disposé en dehors du réservoir (10) dans un premier boîtier (2) raccordé au réservoir, dans lequel le premier groupe de vanne(s) (40) comprend au moins une vanne d'isolation commandée de « type tout ou rien », c'est-à-dire sans fonction de régulation progressive de débit ou de pression, le second groupe de vannes (50, 60, 70) comprenant des vannes de régulation progressive de débit ou de pression, le second groupe de vannes comprenant une première boîte à vanne(s) (60) comprenant au moins une première vanne de contrôle de débit ou de pression reliée directement à la fois à la partie supérieure du volume de stockage et à la partie inférieure du volume de stockage via respectivement une première conduites (14) de gaz (13) et une seconde conduit (13) de liquide, la première (14) et la seconde conduite (13) étant reliées en parallèle à la première boîte (60) à vannes, **caractérisé en ce que** le second groupe de vannes comprend une seconde boîte à vanne(s) (70) comprenant au moins une seconde vanne de contrôle de débit ou de pression reliée directement à la fois à la partie supérieure du volume de stockage et à la partie inférieure du volume de stockage via respectivement la première conduites (14) de gaz (13) et la seconde conduit (13) de liquide, la première (14) et la seconde conduite (13) étant reliées en parallèle à la fois à la première boîte (60) à vannes et à la seconde boîte à vanne(s) (70).

2. Dispositif selon la revendication 1, **caractérisé en ce que** le premier groupe de vanne(s) (40) comprend uniquement une ou des vannes d'isolation disposées sur la circuiterie (20) et configurées pour être commutées entre un premier état fermé empêchant le transfert de fluide depuis ou vers le réservoir (10), par exemple en cas d'installation ou de réparation, et un second état ouvert permettant le transfert de fluide depuis ou vers le réservoir (10), par exemple en cours d'utilisation.

3. Dispositif selon la revendication 1 ou 2, **caractérisé en ce que** le premier groupe de vanne(s) (40) est disposé dans un second boîtier (40) disposé dans l'espacement du réservoir (10).

4. Dispositif selon l'une quelconque des revendication 1 à 3, **caractérisé en ce que** le premier boîtier (2) est fixé à l'enveloppe (12) externe du réservoir (10).

5. Dispositif selon l'une quelconque des revendications 1 à 4, **caractérisé en ce que** le second groupe de vannes comprend une troisième boîte à vanne(s) (80) comprenant au moins une troisième vanne de contrôle de débit et au moins un échangeur de chaleur en échange thermique avec la circuiterie pour contrôler la température du fluide, la troisième boîte à vanne(s) (80) étant reliée directement à la fois à la partie supérieure du volume de stockage et à la partie inférieure du volume de stockage via respectivement la première conduites (14) de gaz et la seconde conduit (13) de liquide, la première (14) et la seconde conduite (13) étant reliées en parallèle à la fois à la première boîte (60) à vannes, à la seconde boîte à vanne(s) (70) et la troisième boîte à vanne(s) (80), de préférence au moins l'une parmi : la première boîte à vanne(s) (60), la seconde boîte à vanne(s) (70), la troisième boîte à vanne(s) (80) étant étanche et isolée sous vide.

6. Dispositif selon la revendication 5, **caractérisé en ce que** la première boîte à vanne(s) (60) et la seconde boîte à vanne(s) (70) sont des boîtes distinctes étanches isolées sous vide dont les vides sont indépendants ou bien, la première boîte à vanne(s) (60) et la seconde boîte à vanne(s) (70) sont respectivement deux compartiments d'une même boîte et dont l'étanchéité sous vide est commune.

7. Dispositif selon l'une quelconque des revendications 1 à 6, **caractérisé en ce que** la circuiterie comprend une boucle (17) de circulation transitant dans le volume de stockage.

8. Dispositif selon la revendication 7 et la revendication 5, **caractérisé en ce que** la boucle (17) de circulation transitant dans le volume de stockage est raccordée à la troisième boîte à vanne(s) (80).

9. Dispositif selon l'une quelconque des revendications 1 à 8, **caractérisé en ce que** le premier boîtier (2) est isolé thermiquement et son volume interne est à atmosphère contrôlée, par exemple à majorité de gaz inerte ou ventilé avec un gaz inerte tel que l'azote.

10. Dispositif selon l'une quelconque des revendications 1 à 9, **caractérisé en ce que** le second groupe de vannes comprend une soupape (50) de décharge ayant une première extrémité reliée directement à la partie supérieure du volume de stockage via une conduite (16) de décharge traversant le réservoir (10) et une seconde extrémité reliée à une zone de décharge de gaz, la soupape (50) de décharge étant de préférence située dans une quatrième boîte à vannes.

11. Dispositif selon l'une quelconque des revendications 1 à 10, **caractérisé en ce que** le premier boîtier (2) comprend un plancher (24) horizontal et **en ce qu'**une partie au moins de la circuiterie (20) située dans le boîtier (2) transite sous le plancher (24).

12. Dispositif selon l'une quelconque des revendications 1 à 11, **caractérisé en ce que** le premier boîtier (2) comprend un bac (25) de recueil de fuites de liquide disposé en partie inférieure du boîtier (2) sous le second groupe de vannes.

13. Véhicule, par exemple bateau, comprenant une enceinte (18) abritant, un moteur (19) de propulsion du type à combustion d'un fluide carburant et un dispositif (1) de stockage et de fourniture de fluide selon l'une quelconque des revendications 1 à 12, dans lequel, le dispositif (1) de stockage est configuré pour stocker le fluide carburant du moteur (19) de propulsion.

14. Véhicule selon la revendication 13, **caractérisé en ce qu'**il comprend une première interface (21) de raccordement de transfert de fluide accessible à l'extérieure de l'enceinte (18), la première interface (21) de raccordement de transfert de fluide étant reliée à la première boîte (60) à vannes (60) de la circuiterie (20) au niveau du premier boîtier (2) via un premier ensemble de conduites (121) de transfert.

15. Véhicule selon la revendication 14, **caractérisé en ce qu'**il comprend une seconde interface (22) de raccordement de transfert de fluide accessible à l'extérieure de l'enceinte (18), la seconde interface (22) de raccordement de transfert de fluide étant reliée au second groupe de vannes (70) de la circuiterie (20) au niveau du premier boîtier (2) via un deuxième ensemble de conduites (122) de transfert.

16. Véhicule selon l'une quelconque des revendications 13 à 15, **caractérisé en ce qu'**il comporte un générateur (23) électrique à partir d'un fluide carburant, dans lequel, le dispositif (1) de stockage est configuré pour stocker le fluide du générateur (23) électrique, le véhicule comprenant une conduite d'alimentation reliant une sortie du second groupe de vannes (80) de la circuiterie (20) à une entrée du générateur (23) électrique.

17. Véhicule selon l'une quelconque des revendications 13 à 16, **caractérisé en ce qu'**il comporte une cheminée (25) d'évent reliée au second groupe de vannes (50) de la circuiterie (20) au niveau du premier boîtier (2) via une conduite (26) d'évent.

18. Procédé de stockage et de distribution d'un fluide cryogénique, par exemple parmi : l'hydrogène liquéfié, le gaz naturel liquéfié, utilisant un dispositif selon l'une quelconque des revendications 1 à 12, ou un véhicule selon l'une quelconque des revendications 13 à 17, le procédé comprenant une étape de remplissage du réservoir avec du liquide cryogénique via la circuiterie (20) et l'ensemble de vannes dans lequel au moins une partie du premier groupe de vanne(s) (40) est ouvert.

19. Procédé selon la revendication 18 de stockage et de distribution d'un premier type de fluide cryogénique par exemple, du gaz naturel liquéfié ou d'un second type fluide cryogénique, par exemple l'hydrogène liquéfié, utilisant un même dispositif (1) de stockage et de fourniture de fluide, dans lequel, lorsque le dispositif (1) stocke et distribue le premier type de fluide cryogénique la seconde boîte à vanne(s) (70) est utilisée pour le transfert du fluide tandis que première boîte à vanne(s) (60) n'est pas utilisée et est en état fermée, et lorsque le dispositif (1) stocke et distribue le second type de fluide cryogénique, la première boîte à vanne(s) (60) est utilisée pour le transfert du fluide tandis que la seconde boîte à vanne(s) (70) est fermée.
